(19) **Europäisches Patentamt / European Patent Office / Office européen des brevets**

(11) **EP 4 589 988 A1**

(12) **EUROPEAN PATENT APPLICATION**
published in accordance with Art. 153(4) EPC

(43) Date of publication:
**23.07.2025 Bulletin 2025/30**

(21) Application number: **23865180.6**

(22) Date of filing: **18.08.2023**

(51) International Patent Classification (IPC):
*H04R 3/00* (2006.01)    *G02F 1/13* (2006.01)
*G02F 1/1333* (2006.01)    *G02F 1/13357* (2006.01)
*H04N 5/64* (2006.01)    *H04R 1/02* (2006.01)
*H04R 5/02* (2006.01)    *H04R 7/04* (2006.01)
*H04R 17/00* (2006.01)

(52) Cooperative Patent Classification (CPC):
G02F 1/13; G02F 1/1333; G02F 1/1336;
H04N 5/64; H04R 1/02; H04R 3/00; H04R 5/02;
H04R 7/04; H04R 17/00

(86) International application number:
**PCT/JP2023/029784**

(87) International publication number:
**WO 2024/057821 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022  JP 2022146497**

(71) Applicant: **Sony Group Corporation**
**Tokyo 108-0075 (JP)**

(72) Inventors:
• **YOSHIOKA, Hiroshi**
  **Tokyo 108-0075 (JP)**
• **GOMYO, Shigeo**
  **Tokyo 108-0075 (JP)**
• **TOYOSHIMA, Kenichiro**
  **Tokyo 108-0075 (JP)**
• **OHASHI, Yoshio**
  **Tokyo 108-0075 (JP)**
• **HAMAKAWA, Manabu**
  **Tokyo 108-0075 (JP)**

(74) Representative: **2SPL Patentanwälte PartG mbB**
**Landaubogen 3**
**81373 München (DE)**

(54) **DISPLAY DEVICE AND SIGNAL PROCESSING METHOD**

(57)    A display apparatus includes a display unit including a liquid crystal panel, an exciter that is bonded to an opposite side of a surface of the liquid crystal panel and is driven to vibrate the liquid crystal panel, and an output control unit configured to control driving the exciter in a range exceeding a predetermined frequency based on information regarding the liquid crystal panel to output sound from the liquid crystal panel.

FIG.6

EP 4 589 988 A1

**Description**

Field

The present disclosure relates to a display apparatus that functions as a flat panel speaker and a signal processing method.

Background

In a display apparatus such as a television, a flat panel speaker including a flat panel and an exciter that vibrates the flat panel has been proposed. The flat panel speaker generates excitation in the flat panel by the exciter, thereby outputting sound from the panel.
For example, a technique is known in which a glass constituent body that can be used as a light guide plate of a liquid crystal display is vibrated to cause the glass constituent body to function as a diaphragm of a speaker or a microphone.

Citation List

Patent Literature

Patent Literature 1: WO 2018/181622 A

Summary

Technical Problem

According to the prior art, the light guide plate can be utilized as a speaker having good acoustic performance.
However, the prior art only vibrates the light guide plate, and does not vibrate the liquid crystal cell existing at the spatially separated position. That is, in the prior art, since the air layer is interposed in the sound transmission section, the sound output to the liquid crystal panel side is attenuated, and there is a risk that a sufficient sound cannot be output to the viewer/listener located on the liquid crystal cell side.
However, when the liquid crystal panel itself is tried to be vibrated by the exciter, the liquid crystal may be waved by the excitation force, which may affect the screen display. For this reason, regarding the excitation of the liquid crystal panel, it has been required to excite the liquid crystal panel to such an extent that a sufficient sound pressure can be secured, and to perform control so as not to affect the screen display.
The present disclosure solves these issues, and proposes a display apparatus and a signal processing method capable of achieving sound output that does not cause image blurring while eliminating sound pressure insufficiency.
Solution to Problem
In order to solve the above problems, a display apparatus according to one embodiment of the present disclosure includes a display unit including a liquid crystal panel, an exciter that is bonded to an opposite side of a surface of the liquid crystal panel and is driven to vibrate the liquid crystal panel, and an output control unit configured to control driving the exciter in a range exceeding a predetermined frequency based on information regarding the liquid crystal panel to output sound from the liquid crystal panel.

Brief Description of Drawings

FIG. 1 is a diagram illustrating an example of a display apparatus according to an embodiment.
FIG. 2 is a cross-sectional view of a display unit according to an embodiment.
FIG. 3 is a view illustrating an example of waviness display when the liquid crystal panel is excited.
FIG. 4 is a diagram for explaining a waviness phenomenon of the liquid crystal panel.
FIG. 5 is a diagram for explaining control processing of an excitation frequency according to an embodiment.
FIG. 6 is a view illustrating a speaker arrangement example of the display apparatus according to an embodiment.
FIG. 7 is a diagram illustrating a configuration example of a display apparatus according to an embodiment.
FIG. 8 is a block diagram illustrating an example of sound output according to an embodiment.
FIG. 9 is a block diagram illustrating another example of sound output according to an embodiment.
FIG. 10 is a diagram (1) illustrating a configuration of a display apparatus according to a modification.

FIG. 11 is a diagram (2) illustrating a configuration of a display apparatus according to a modification.
FIG. 12 is a diagram (3) illustrating a configuration of a display apparatus according to a modification.
FIG. 13 is a diagram (4) illustrating a configuration of a display apparatus according to a modification.
FIG. 14 is a diagram (5) illustrating a configuration of a display apparatus according to a modification.
FIG. 15 is a diagram (6) illustrating a configuration of a display apparatus according to a modification.
FIG. 16 is a hardware configuration diagram illustrating an example of a computer that implements functions of a display apparatus.

Description of Embodiments

Hereinafter, embodiments will be described in detail with reference to the drawings. In each of the following embodiments, the same parts are denoted by the same reference numerals, and redundant description will be omitted.
The present disclosure will be described according to the following order of items.

1. Embodiment

1-1. Overview of Display Apparatus According to Embodiment
1-2. Problem of Excitation of Liquid Crystal Panel
1-3. Example of Control Processing According to Embodiment
1-4. Overview of Control Processing According to Embodiment
1-5. Configuration of Display Apparatus According to Embodiment
1-6. Modification of Configuration of Display Apparatus

2. Other Embodiments
3. Effects of Display Apparatus According to Present Disclosure
4. Hardware Configuration

(1-1. Overview of Display Apparatus According to Embodiment)

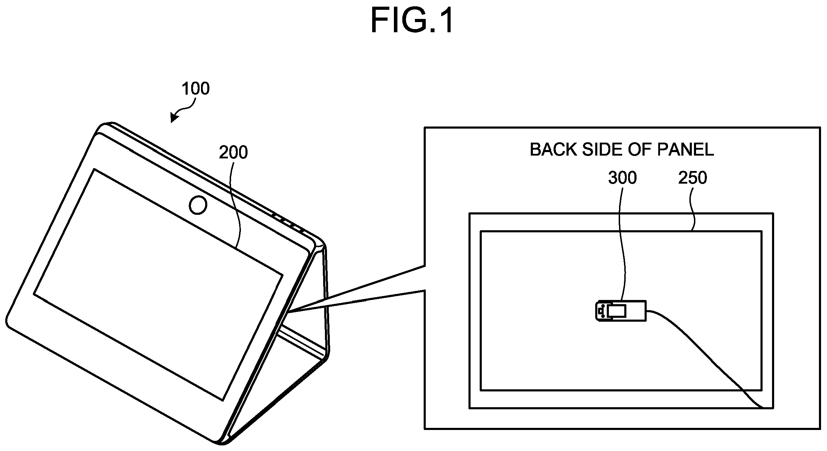

FIG. 1 is a diagram illustrating an example of a display apparatus 100 according to an embodiment. The display apparatus 100 includes a display unit 200 that displays an image. The display unit 200 is, for example, a display including a liquid crystal panel.
The display apparatus 100 according to the embodiment is a so-called stereoscopic display, and is a display apparatus capable of stereoscopically displaying virtual content in a real space. That is, the display apparatus 100 is a so-called naked-eye stereoscopic display capable of stereoscopic viewing without the user wearing dedicated glasses or the like. In the embodiment, the display unit 200 is an inclined screen inclined at a predetermined angle with respect to the horizontal plane. For example, the display unit 200 displays the virtual content perceived by the user as one stereoscopic image by fusing the viewpoint images appearing in the left and right eyes of the user. Specifically, the stereoscopic display detects the line of sight of the user and stereoscopically displays an image based on the detected line of sight. Therefore, the user can perceive the virtual object as a realistic display as if the virtual object exists on the spot.
In a case where such stereoscopic display processing is performed, the distance between the display apparatus 100 and the user is shorter than that in normal video display such as a television. Therefore, the user can more easily specify the position of the sound output unit (that is, the speaker) of the display apparatus 100 than in the normal viewing/listening state. At this time, as a provider who provides the content reproduced by the display apparatus 100, it is ideal to cause the user to perceive as if the sound is actually emitted from the position corresponding to the stereoscopically displayed object.
However, in the display mode according to the embodiment, since the positions of the user and the display apparatus 100 are close, a slight movement of the user's face leads to a large angle change, and phantom localization by the arranged speaker easily collapses. That is, when the speaker is arranged outside the screen of the display apparatus 100, the output sound is hardly localized in the screen.
Therefore, the display apparatus 100 includes an exciter 300 on a sheet metal part 250 on the back side of the display unit 200, that is, on the back side of the liquid crystal panel, and outputs a sound by exciting the display unit 200. The exciter 300 is a vibrating element capable of converting a power change into an excitation force. For example, the exciter 300 is piezo elements or a dynamic vibration exciter. When the high-frequency output is mainly used as in the embodiment, for example, piezo elements suitable for high-frequency sound output may be used as the exciter 300.
That is, the display apparatus 100 includes the exciter 300 on the back side of the display unit 200, and excites the display unit 200 itself to cause the display unit 200 to function as a speaker. As a result, the display apparatus 100 realizes audio output with realistic feeling localized in the object to be displayed.

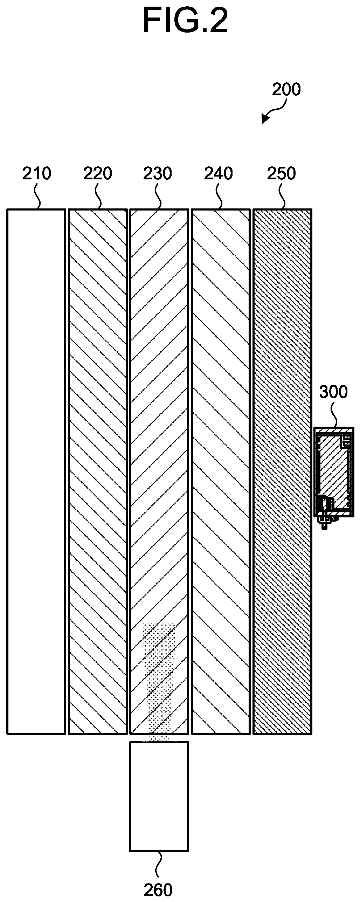

The arrangement of the exciter 300 will be described with reference to FIG. 2. FIG. 2 is a cross-sectional view of the display unit 200 according to the embodiment. In the embodiment, the display unit 200 is configured as an edge-lit liquid crystal display. In the edge-lit liquid crystal display, the entire thickness can be reduced by disposing a light source 260 such as a light emitting diode (LED) on the outer peripheral portion of the screen.

The display unit 200 is configured by stacking a liquid crystal display (LCD) cell 210, a diffusion plate 220, a light guide plate 230, a reflective sheet 240, and a sheet metal part 250 in order from a user side (that is, a screen side) as a viewer/listener. Then, the exciter 300 is disposed on the sheet metal part 250 that is the back of the screen. The light source 260 irradiates the light guide plate 230 from the outer peripheral portion of the screen. Note that, in a case where the display apparatus 100 is a stereoscopic display, the display unit 200 may include a lens array such as a lenticular lens or a parallax barrier layer. The lens array and the parallax barrier layer are disposed on the LCD cell 210, for example, and control the light beam emitted from the LCD cell 210 to enter the user's eye.

According to the configuration illustrated in FIG. 2, the excitation force by the exciter 300 is transmitted to the LCD cell 210 without passing through the air layer or the like. Therefore, the display apparatus 100 can drive the display unit 200 as a speaker capable of outputting a sufficient sound pressure.

(1-2. Problem of Excitation of Liquid Crystal Panel)

However, there is an issue to be solved when the liquid crystal panel is excited with the configuration as illustrated in FIG. 2. That is, when the liquid crystal panel itself is tried to be vibrated by the exciter 300, the liquid crystal may be waved by the excitation force, which may affect the screen display.

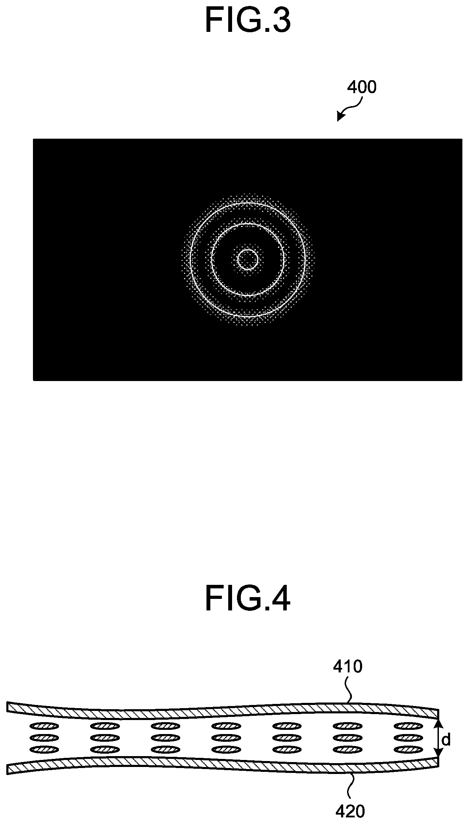

FIG. 3 illustrates a state in which the screen is wavy due to excitation. FIG. 3 is a view illustrating an example of waviness display when a liquid crystal panel 400 is excited. As described above, when the liquid crystal panel 400 is simply excited, a display such as a ripple is generated at a certain distance around the exciter due to the influence of the resonance frequency.

This point will be described with reference to FIG. 4. FIG. 4 is a diagram for explaining a waviness phenomenon of the liquid crystal panel. FIG. 4 illustrates waviness of a front surface 410 and a back surface 420 in the liquid crystal panel 400.

When the liquid crystal panel 400 is excited, the excitation force is transmitted to the liquid crystal panel from the excited point, so that the front surface 410 and the back surface 420 are wavy. Accordingly, thickness d illustrated in FIG. 4 changes depending on the position of the liquid crystal panel 400. Here, the amount of transmitted light I of the liquid crystal panel (LCD) is expressed by the following formula (1) as an example.

$$I = I_0 \cdot \sin^2(2 \cdot \phi) \cdot \sin^2\left(\frac{\Delta n \cdot d \cdot \pi}{\lambda}\right) \qquad \cdots (1)$$

As shown in the above formula (1), the amount of transmitted light I depends on the thickness d. That is, when the amount of change in the thickness d increases, the amount of transmitted light differs for each position of the liquid crystal panel, and a phenomenon that the image looks wavy is observed as illustrated in FIG. 3.

However, when an air layer or the like is provided so that the liquid crystal panel is not directly excited, there is a possibility that sound output with a sufficient sound pressure is not realized as described above.

(1-3. Example of Control Processing According to Embodiment)

Therefore, the display apparatus 100 according to the embodiment enables the display unit 200 to be directly excited while suppressing the waviness of the screen by some methods disclosed in the present specification. As an example, the display apparatus 100 controls the frequency at which the exciter 300 is excited to suppress the waviness of the screen.

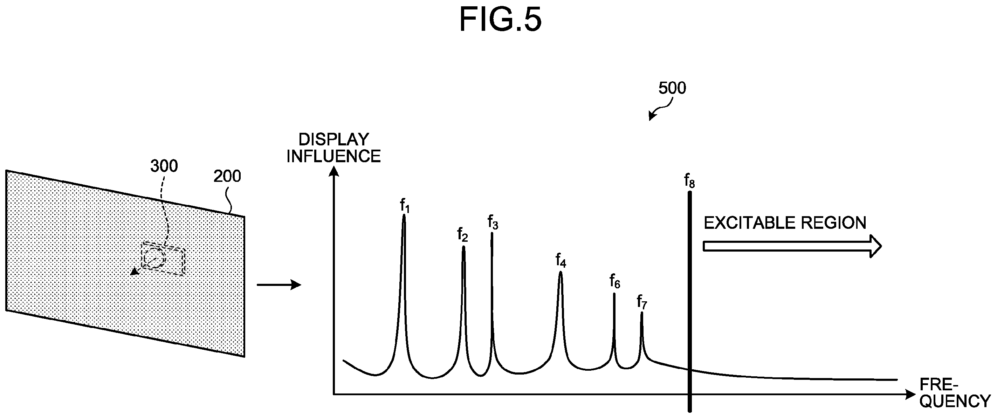

This point will be described with reference to FIG. 5. FIG. 5 is a diagram for explaining control processing of an excitation frequency according to an embodiment.

FIG. 5 illustrates a graph 500 illustrating a relationship between a display influence (for example, a change in the amount of transmitted light) and a frequency when the display unit 200 is actually excited by the exciter 300. "f" illustrated in FIG. 5 indicates a frequency. Note that the resonance frequency varies based on the area, weight, material, and the like of the display unit 200.

For example, the display apparatus 100 detects a frequency that affects the display by the display unit 200 by actually exciting the display unit 200 to be excited. At the time of detection, in order to match the actual use state of the display apparatus 100, it is desirable that the excitation point is set to the actual attachment position, and the method of attaching the exciter 300 is also equivalent to the actual use state. In addition, at the time of detection, it is desirable that the excitation force applied to the exciter 300 is matched to actual use. However, since the excitation force varies in actual use, the excitation force is set in consideration of such an uncertain element. Further, the detection is desirably performed in a plurality of environments using a plurality of different display units 200.

With such detection, the display apparatus 100 detects the maximum value of the resonance frequency having a large display influence. In the example of FIG. 5, it is assumed that the display apparatus 100 detects "f7" as the maximum value of the resonance frequency having a large display influence. In this example, it is assumed that the maximum value of the resonance frequency "f7" is "1000 Hz".

In this case, the display apparatus 100 sets a band with frequencies higher than the frequency twice as high as the highest frequency, which affects the panel, as an excitable region. In this example, the display apparatus 100 sets a band exceeding "f8 = 2000 Hz", which is twice the maximum value "f7" of the resonance frequency, as the excitable region. Note that such numerical values are merely examples, and the resonance frequency of the panel is not necessarily multiplied, and there is a possibility that various frequencies are mixed.

As described above, the display apparatus 100 drives the exciter 300 in a range exceeding a predetermined frequency (in this example, a frequency corresponding to "f8") determined in advance according to the information regarding the display unit 200, thereby performing control to output sound from the display unit 200. As a result, the display apparatus 100 can directly excite the display unit 200 (liquid crystal panel) without affecting the screen display, so that it is possible to realize sound output that does not cause image blurring while eliminating sound pressure insufficiency.

(1-4. Overview of Control Processing According to Embodiment)

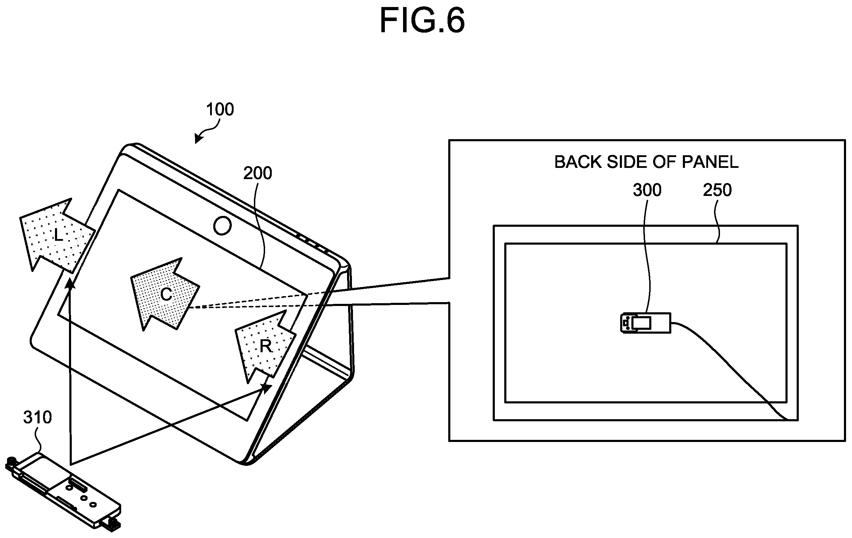

Here, a configuration example in a case where the display apparatus 100 actually outputs sound will be described with reference to FIG. 6 and subsequent drawings. FIG. 6 is a view illustrating a speaker arrangement example of the display apparatus 100 according to the embodiment.

As illustrated in FIG. 6, the display apparatus 100 may include, for example, a side speaker 310 in addition to the exciter 300 in order to realize a wide reproduction frequency while enhancing the localization sensation of the sound image. For example, the side speaker 310 is a slit-type speaker incorporated in a housing at left and right (LR) ends of the display apparatus 100. Note that the side speaker 310 is not limited to the slit-type speaker, and may have any form such as a general cone-type speaker including a tweeter and a woofer unit.

In the display apparatus 100, as described above, the output unit from which the sound is directly output from the screen ("C" in FIG. 6, that is, corresponding to the center speaker) is implemented by the exciter 300, and the sound output including the low frequency range not reproduced from the exciter 300 is implemented by the side speaker 310. That is, the display apparatus 100 localizes the sound in the screen by directly exciting the screen and outputting the sound at the high frequency effective for localization. Furthermore, the display apparatus 100 can perform wide-band sound reproduction by outputting a low frequency from the left and right side speakers 310.

Note that, in a case where the configuration illustrated in FIG. 6 is provided, the display apparatus 100 can also adjust the output (excitation) of the exciter 300 by controlling separation of the reproduction signal into channels. Details of the channel separation control processing will be described later.

(1-5. Configuration of Display Apparatus According to Embodiment)

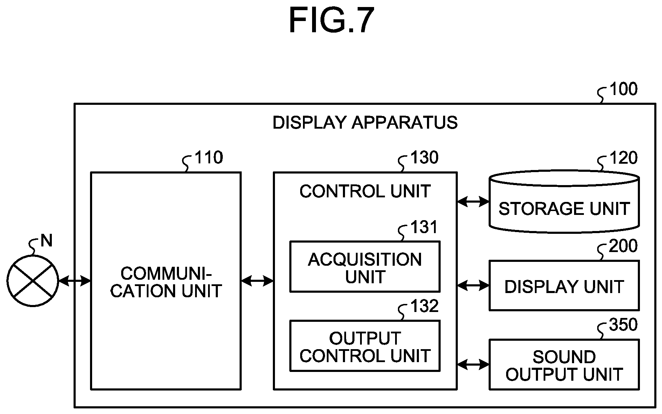

Next, a configuration of the display apparatus 100 will be described. FIG. 7 is a diagram illustrating a configuration example of the display apparatus 100 according to the embodiment.

As illustrated in FIG. 7, the display apparatus 100 includes a communication unit 110, a storage unit 120, and a control unit 130. Note that the display apparatus 100 may include an input unit (a keyboard, a touch panel, or the like) that receives various operations from an administrator or the like that manages the display apparatus 100.

The communication unit 110 is implemented by, for example, a network interface card (NIC), a network interface controller, or the like. The communication unit 110 is connected to the network N in a wired or wireless manner, and transmits and receives information to and from an external device or the like that provides content to be reproduced by the display apparatus 100 via the network N. The network N is realized by, for example, a wireless communication standard or system such as Bluetooth (registered trademark), the Internet, Wi-Fi (registered trademark), ultra wide band (UWB), or low power wide area (LPWA) .

The storage unit 120 is implemented by, for example, a semiconductor memory element such as a random access memory (RAM) or a flash memory, or a storage device such as a hard disk or an optical disk.

For example, the storage unit 120 stores image content and sound content reproduced by the display apparatus 100. Furthermore, the storage unit 120 may store information such as the area, weight, material, and the like of the display unit 200, or information such as a frequency domain at a time when the exciter 300 is excited in the display unit 200.

The control unit 130 is implemented by, for example, a central processing unit (CPU), micro processing unit (MPU), GPU, or the like to cause a program stored in the display apparatus 100 (for example, a display control program according to the present disclosure) to be executed on a RAM or the like as a work area. In addition, the control unit 130 is a controller and may be implemented by, for example, an integrated circuit such as an application specific integrated circuit (ASIC) or field programmable gate array (FPGA).

As illustrated in FIG. 7, the control unit 130 includes an acquisition unit 131 and an output control unit 132.

The acquisition unit 131 acquires various types of information. For example, the acquisition unit 131 acquires data of content to be reproduced by the display apparatus 100 via the network N. Furthermore, the acquisition unit 131 may acquire information such as the area, weight, material, and the like of the display unit 200, or information such as a frequency domain at a time when the exciter 300 is excited in the display unit 200.

The output control unit 132 drives the exciter 300 in a range exceeding a predetermined frequency based on the information regarding the display unit 200, thereby performing control to output sound from the display unit 200. For example, the predetermined frequency may be determined in the information processing process according to the information on the display unit 200, or may be determined in advance at the time of shipment or manufacturing. The sound controlled by the output control unit 132 is transmitted to a sound output unit 350 and is actually output externally. Note that the sound output unit 350 includes, for example, a member having a sound output function, such as the exciter 300 or the side speaker 310.

For example, the output control unit 132 drives the exciter 300 on the basis of a predetermined frequency determined according to the resonance frequency of the display unit 200. Specifically, the output control unit 132 sets a frequency exceeding twice the maximum value of the resonance frequency that affects the display as the predetermined frequency, and drives the exciter 300 in a frequency domain exceeding the predetermined frequency. As a result, the output control unit 132 can drive the display unit 200 as a speaker while suppressing the screen waviness phenomenon.

Furthermore, the output control unit 132 may drive the exciter 300 on the basis of a predetermined frequency determined according to the excitation force for driving the exciter 300. In general, as the excitation force increases, the display influence of the screen increases, and thus, the excitation force can be a parameter that affects the display. Therefore, the output control unit 132 may determine the predetermined frequency in consideration of the excitation force in the detection in advance, and drive the exciter 300 on the basis of the determined predetermined frequency.

Furthermore, the output control unit 132 may drive the exciter 300 on the basis of a predetermined frequency determined according to the weight of the display unit 200. This is because it is assumed that according to the weight, the resonance frequency in the display unit 200 changes or the value of the frequency that affects the display changes. In other words, the output control unit 132 may determine the predetermined frequency in consideration of the weight of the display unit 200 in the detection in advance, and drive the exciter 300 on the basis of the determined predetermined frequency. For example, when the weight of the display unit 200 decreases, the sound pressure of the sound output by the vibration of the exciter 300 increases. In this case, the output control unit 132 can vibrate the exciter 300 in a lower frequency band. On the other hand, when the weight of the display unit 200 increases, the sound pressure of the sound output by the vibration of the exciter 300 decreases. At this time, since it is necessary for the output control unit 132 to increase the excitation force to the exciter 300 in order to maintain the sound pressure, the excitation frequency of the exciter 300 may be further increased in order to suppress the waviness phenomenon.

Furthermore, the output control unit 132 may drive the exciter 300 on the basis of a predetermined frequency determined according to the area of the display unit 200. This is because it is assumed that according to the area of the display unit 200 (that is, the display area of the liquid crystal panel), the resonance frequency in the display unit 200 changes or the value of the frequency that affects the display changes.

Note that the weight and area of the display unit 200 and the excitation force applied to the exciter 300 described above may affect each other. Therefore, for example, the output control unit 132 detects an optimum predetermined frequency with respect to the actual display unit 200 by processing in advance, and then determines a frequency domain at which the exciter 300 is excited.

Note that, as illustrated in FIG. 6, the display apparatus 100 may include a sound output unit that does not depend on the exciter 300, such as the side speaker 310, in addition to the flat panel speaker by the exciter 300. In this case, the output control unit 132 controls driving of the sound output unit other than the exciter together with the exciter 300.

That is, in a case where the sound output unit 350 includes a plurality of components, the output control unit 132 may control how to output sound from each channel. For example, the output control unit 132 controls the sound output from the exciter 300 (high frequency output) or another sound output unit (medium-to-low frequency output) by using a circuit that separates sound.

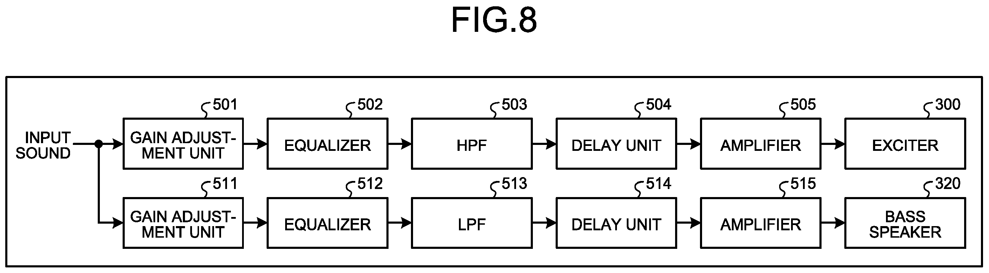

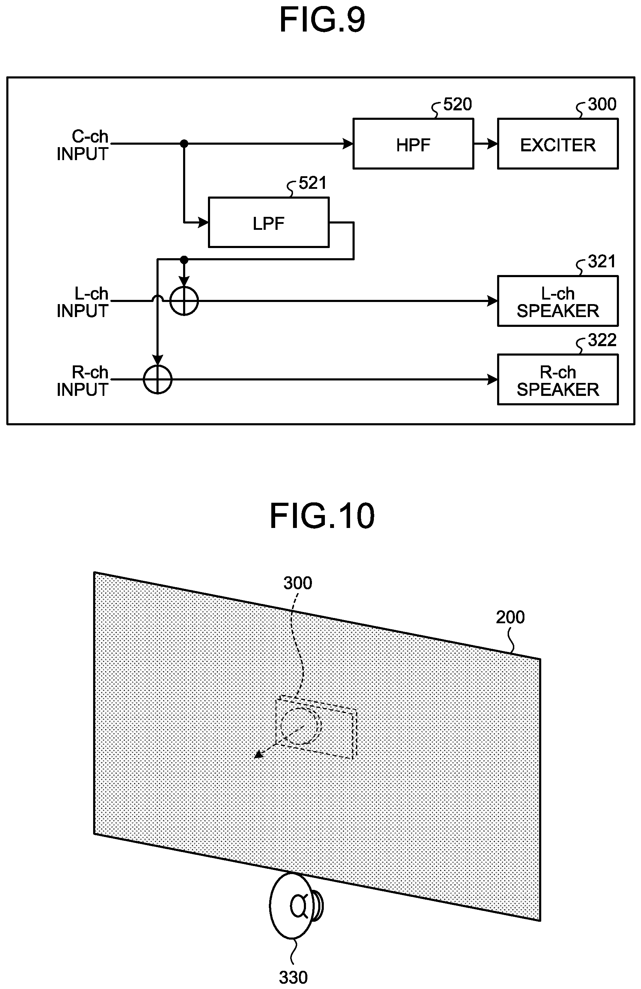

This point will be described with reference to FIGS. 8 and 9. FIG. 8 is a block diagram illustrating an example of sound output according to the embodiment. FIG. 8 illustrates an example of a case where the output control unit 132 outputs sound from the exciter 300 for high-frequency output and a bass speaker 320 for medium-to-low frequency output.

In this case, for the high frequency output, the output control unit 132 cuts off the medium-to-low frequency portions of the sound by passing the input sound through a high pass filter (HPF) 503 via a gain adjustment unit 501 and an equalizer 502. Thereafter, the sound signal is input to the exciter 300 via a delay unit 504 and an amplifier 505, and is output as sound by vibration of the exciter 300.

On the other hand, the output control unit 132 cuts the high-frequency portion of the sound by passing the input sound through a low pass filter (LPF) 513 via a gain adjustment unit 511 and an equalizer 512 for the medium-to-low frequency output. Thereafter, the sound signal is input to the bass speaker 320 via a delay unit 514 and an amplifier 515, and is output as sound from the bass speaker 320.

As described above, when receiving the input of the sound signal, the output control unit 132 may separate the sound signal on the basis of the predetermined frequency, drive the exciter 300 with the separated sound signal of the high frequency (that is, a frequency domain exceeding the predetermined frequency), and drive the sound output unit other than the exciter 300 with the separated sound signal of the medium-to-low frequency (that is, a frequency domain equal to or lower than the predetermined frequency). In this case, the output control unit 132 may perform control to drive the sound output unit other than the exciter 300 only with the separated sound signal corresponding to the frequency domain equal to or lower than the predetermined frequency.

Next, an example in which the sound output unit 350 includes a C channel (exciter 300) and LR channels (L-ch speaker 321 and R-ch speaker 322) will be described with reference to FIG. 9. FIG. 9 is a block diagram illustrating another example of sound output according to the embodiment. In FIG. 9, illustration of the same configuration as that of FIG. 8 is omitted.

In the example of FIG. 9, for the high-frequency output, the output control unit 132 cuts the medium-to-low frequency portions of the sound by passing the input sound through the HPF 520. Thereafter, the sound signal is input to the exciter 300, and is output as sound of the C channel by vibration of the exciter 300.

On the other hand, for the medium-to-low frequency output of the C channel, the output control unit 132 cuts the high frequency portion of the sound by passing the input sound through the LPF 521. Thereafter, the sound signal is separated into an L channel and an R channel, respectively, and is synthesized into an original L channel sound signal and an original R channel sound signal. Then, the sound signal is input to the L-ch speaker 321 or the R-ch speaker 322, and is output as sound of an LR channels from each speaker.

As described above, the output control unit 132 may control the sound output unit 350 in which the exciter 300 is set as the center channel output and the sound output units other than the exciter are set as the left and right channel outputs. In this case, the output control unit 132 separates the medium-to-low frequency portions of the sound signals input to the center channel output, and synthesizes the separated sound signal components into the sound signals input to the left and right channel outputs.

Note that, in such a multi-channel sound output mechanism, the output control unit 132 may adjust an output value and a frequency band of an output signal by using signal processing. For example, in a case where the sound output value by the exciter 300 is smaller than expected, the output control unit 132 may supplement the output with the output of the LR channels. In this case, the output control unit 132 may appropriately adjust the set frequency of the LPF or the HPF so that the sound is reproduced at an optimum frequency in the entire multi-channels. These adjustments may be realized by known sound signal separation processing or the like.

Furthermore, in a case where the output from the exciter 300 is larger than expected (that is, in a case where the excitation force increases), the output control unit 132 may adjust the predetermined frequency according to the output value so as not to affect the screen. As a result, the output control unit 132 can perform control so as not to cause a screen waviness phenomenon even in a case where the output value of the sound increases.

The display unit 200 is a functional unit for displaying an image or the like, that is, a display. In the embodiment, the display unit 200 is a liquid crystal panel having the configuration illustrated in FIG. 2.

For example, the display unit 200 is configured as an edge-lit liquid crystal panel. More specifically, the display unit 200 has a structure in which no air layer is provided between the exciter 300, the light guide plate in the edge-lit liquid crystal panel, and the liquid crystal cell. As a result, the display apparatus 100 can transmit the excitation force of the exciter 300 to the surface (screen side) of the liquid crystal panel without passing through the air layer, so that the display unit 200 can function as a flat panel speaker having a sufficient output.

As an example, the display unit 200 can take a mode of a stereoscopic display as illustrated in FIG. 1. However, the display unit 200 is not limited to a stereoscopic display, and may be any mode as long as it is a liquid crystal panel.

(1-6. Modification of Configuration of Display Apparatus)

Although it has been described above that the display apparatus 100 may include the multichannel sound output unit 350, the configuration of the sound output unit 350 can be variously modified. This point will be described with reference to FIGS. 10 to 15.

FIG. 10 is a diagram (1) illustrating a configuration of the display apparatus 100 according to a modification. In FIG. 10, the display apparatus 100 includes one output unit that causes the display unit 200 to function as a flat panel speaker unit by the vibration of the exciter 300, and a speaker 330 that outputs a medium-to-low frequency sound at the lower center of the screen. In such a configuration, the display apparatus 100 outputs sound via, for example, the signal path illustrated in FIG. 8.

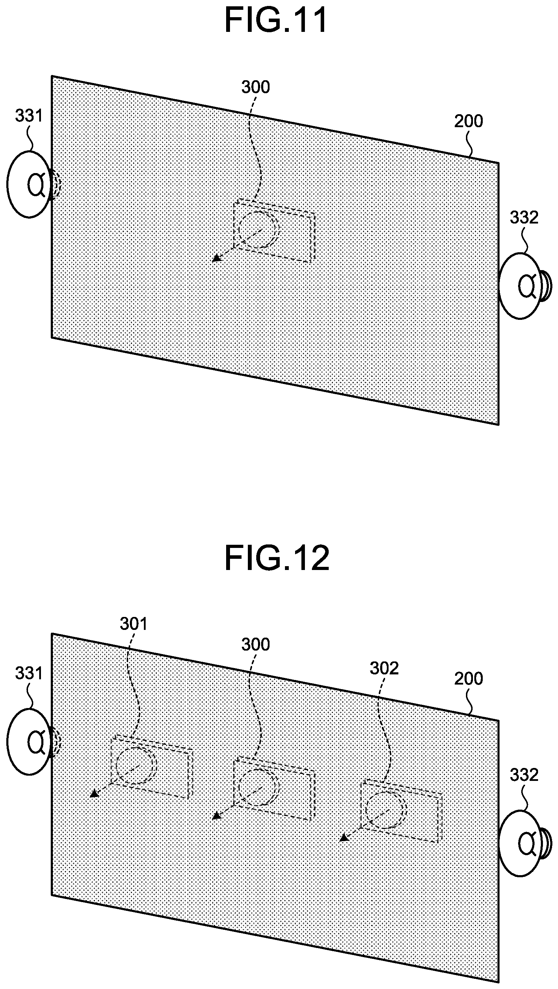

FIG. 11 is a diagram (2) illustrating a configuration of the display apparatus 100 according to a modification. In FIG. 11, the display apparatus 100 includes one output unit that causes the display unit 200 to function as a flat panel speaker unit by the vibration of the exciter 300, and LR speakers (a speaker 331 and a speaker 332) that outputs a medium-to-low frequency sound at the left and right ends of the screen. In such a configuration, the display apparatus 100 outputs sound via, for example, the signal path illustrated in FIG. 9.

FIG. 12 is a diagram (3) illustrating a configuration of the display apparatus 100 according to a modification. In FIG. 12, the display apparatus 100 includes three output units that cause the display unit 200 to function as a flat panel speaker unit by the vibration of the exciter 300, and LR speakers that output a medium-to-low frequency sound at the left and right ends of the screen. As described above, the display apparatus 100 may have a configuration including a plurality of exciters. In this case, the output control unit 132 controls outputs of the exciters 300, 301, and 302. Note that components for separating the vibration region (such as a tape for vibration suppression) may be provided between the exciter 300, the exciter 301, and the exciter 302 constituting the flat panel speaker unit.

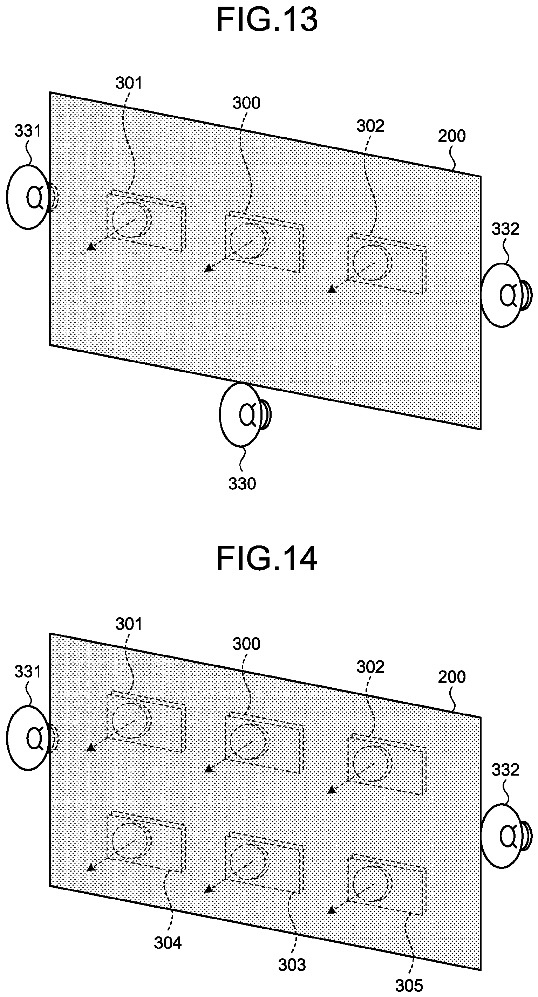

FIG. 13 is a diagram (4) illustrating a configuration of the display apparatus 100 according to a modification. In FIG. 13, the display apparatus 100 includes three output units that cause the display unit 200 to function as a flat panel speaker unit by the vibration of the exciter 300, a speaker 330 that outputs a medium-to-low frequency sound at the lower center of the screen, and LR speakers that output a medium to low frequency sound at the left and right ends of the screen.

FIG. 14 is a diagram (5) illustrating a configuration of the display apparatus 100 according to a modification. In FIG. 14, the display apparatus 100 includes six output units that cause the display unit 200 to function as a flat panel speaker unit by the vibration of the exciter 300, and LR speakers that output a medium-to-low frequency sound at the left and right ends of the screen. Also in this case, the components for separating the vibration region may be provided between the exciter 300, the exciter 301, the exciter 302, the exciter 303, the exciter 304, and the exciter 305 constituting the flat panel speaker unit.

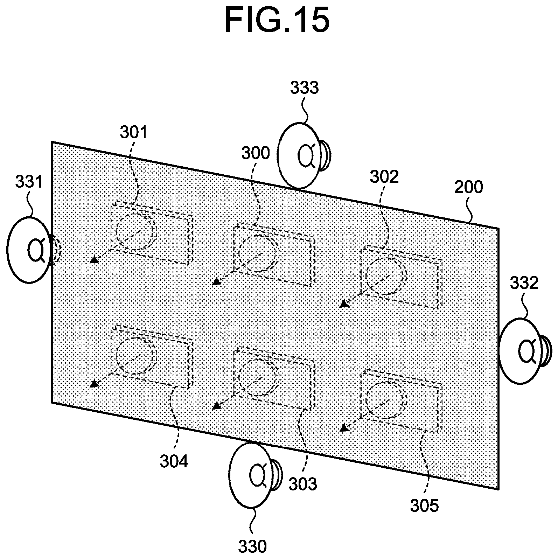

FIG. 15 is a diagram (6) illustrating a configuration of the display apparatus 100 according to a modification. In FIG. 15, the display apparatus 100 includes six output units that cause the display unit 200 to function as a flat panel speaker unit by the vibration of the exciter 300, a speaker 330 and a speaker 333 that output a medium to low frequency sound at the upper and lower center of the screen, and LR speakers that output a medium-to-low frequency sound at the left and right ends of the screen.

As described above, in the display apparatus 100, the sound output unit 350 can be configured by combining the exciter 300 and the speaker in various modes. As a result, the display apparatus 100 can realize sound output of various modes according to a request for content to be reproduced or a request of the user. Note that the speakers illustrated in FIGS. 10 to 15 are not necessarily provided near the screen, but may be connected in a wired or wireless manner and installed at a position away from the screen.

(2. Other Embodiments)

The processing according to the above-described embodiment may be implemented in various different modes other than the above-described embodiment.

In addition, among the processing described in the above embodiments, all or a part of the processing, described as automatic processing, can be performed manually, or all or a part of the processing, described as manual processing, can be performed automatically by a known method. In addition, the processing procedures, specific names, and information including various data and parameters indicated in the above document and the drawings can be arbitrarily changed unless otherwise specified. For example, various types of information illustrated in the drawings are not limited to the illustrated information.

Furthermore, the constituent elements of the individual devices illustrated in the drawings are functionally conceptual and are not necessarily configured physically as illustrated in the drawings. To be specific, the specific form of distribution and integration of the devices is not limited to the one illustrated in the drawings, and all or a part thereof can be configured by functionally or physically distributing and integrating in any units according to various loads, usage conditions, and the like.

For example, in the embodiment, the display apparatus 100 has been exemplified as a display-integrated information device including the display unit 200. However, the display unit 200 may be an external display connected to an information device such as a PC via an interface. In such a case, the information processing of the present disclosure can be used as a signal control method for driving the external display as a speaker.

Furthermore, the above-described embodiments and modifications can be appropriately combined within a range that the processing contents do not contradict each other.

In addition, the effects described in the present specification are merely examples and are not limited, and other effects may be provided.

(3. Effects of Display Apparatus According to Present Disclosure)

As described above, the display apparatus (the display apparatus 100 in the embodiment) according to the present disclosure includes the display unit including the liquid crystal panel (the display unit 200 in the embodiment), and the exciter that is bonded to the opposite side of the surface of the liquid crystal panel and drives the liquid crystal panel to vibrate (the exciter 300 in the embodiment). Furthermore, the display apparatus includes an output control unit that drives the exciter in a range exceeding a predetermined frequency based on the information regarding the liquid crystal panel to control to output sound from the liquid crystal panel (in the embodiment, the output control unit 132).

As described above, the display apparatus determines a predetermined frequency serving as a reference according to the liquid crystal panel, and controls the exciter to vibrate in a band exceeding the predetermined frequency. As a result, the display apparatus can drive the liquid crystal panel as a flat panel speaker while suppressing the frequencies in the medium-to-low frequencies that are likely to affect the display. That is, the display apparatus can realize sound output that does not cause image blurring while eliminating the insufficient sound pressure.

The output control unit drives the exciter on the basis of a predetermined frequency based on the resonance frequency of the liquid crystal panel. Furthermore, the output control unit may drive the exciter on the basis of a predetermined frequency based on the excitation force for driving the exciter. In addition, the output control unit may drive the exciter on the basis of a predetermined frequency based on the weight of the liquid crystal panel. Furthermore, the output control unit may drive the exciter on the basis of a predetermined frequency based on the area of the liquid crystal panel.

As described above, the display apparatus determines a different predetermined frequency for each liquid crystal panel according to the weight or the like of the liquid crystal panel, and then drives the exciter, so that it is possible to output sound without causing image blurring in various liquid crystal panels.

Furthermore, the display apparatus further includes a sound output unit that performs sound output by a method different from that of the exciter. The output control unit controls driving of the sound output unit other than the exciter together with the exciter.

As described above, the display apparatus includes another speaker to be driven together with the exciter, so that it is possible to realize rich sound reproduction including the medium-to-low frequencies not output from the exciter.

Further, when receiving the input of the sound signal, the output control unit may separate the sound signal on the basis of the predetermined frequency, drive the exciter with the separated sound signal of the high frequency, and drive the sound output unit other than the exciter with the separated sound signal of the medium-to-low frequency. Furthermore, in a case where the output control unit includes a sound output unit that includes the exciter as a center channel output and the sound output unit other than the exciter as the left and right channel output, the output control unit may separate a medium-to-low frequency portion of the sound signal input to the center channel output and synthesize the separated sound signal component with the sound signal input to the left and right channel output.

As described above, in the display apparatus, the sound signal is separated between the exciter and the normal speaker, so that it is possible to perform control such that the medium-to-low frequency sound is not output from the exciter, and thus, it is possible to suppress the occurrence of the image blurring of the liquid crystal panel.

In addition, the liquid crystal panel may be an edge-lit liquid crystal panel. Furthermore, the liquid crystal panel may have a structure in which no air layer is provided between the exciter, the light guide plate in the edge-lit liquid crystal panel, and the liquid crystal cell.

As described above, according to the display apparatus of the configuration of the present disclosure, the function as the flat panel speaker can be realized while the image blurring is suppressed even in the liquid crystal panel in which the image blurring is easily generated as compared with an organic light emitting diode (OLED) panel and the like.

In addition, a plurality of exciters may be bonded to the opposite side of the surface of the liquid crystal panel. The output control unit controls outputs of the plurality of exciters.

As described above, the display apparatus can ensure a larger sound pressure and realize sound reproduction with a more excellent sense of localization by controlling the plurality of exciters.

Further, the exciter is installed on the opposite side of the standing image display side in the stereoscopic display, and is driven to vibrate the stereoscopic display. The output control unit drives the exciter in a range not exceeding a predetermined frequency on the basis of the information regarding the stereoscopic display, thereby performing control to output sound from the stereoscopic display.

As described above, the display apparatus can realize sound reproduction with realistic feeling localized on the screen even in viewing/listening on a stereoscopic display in which the user is located at a short distance as compared with viewing/listening on a general television or the like.

In addition, the display apparatus includes a display unit including an edge light type liquid crystal panel, and an exciter that is bonded to an opposite side of a surface of the edge-lit liquid crystal panel and drives the edge-lit liquid crystal panel to vibrate. The exciter includes at least one vibrating element for a frequency domain output exceeding a predetermined frequency.

As described above, the display apparatus includes the vibrating element (piezo element) that outputs the high frequency sound, so that the flat panel speaker in which the image blurring is suppressed can function.

(4. Hardware Configuration)

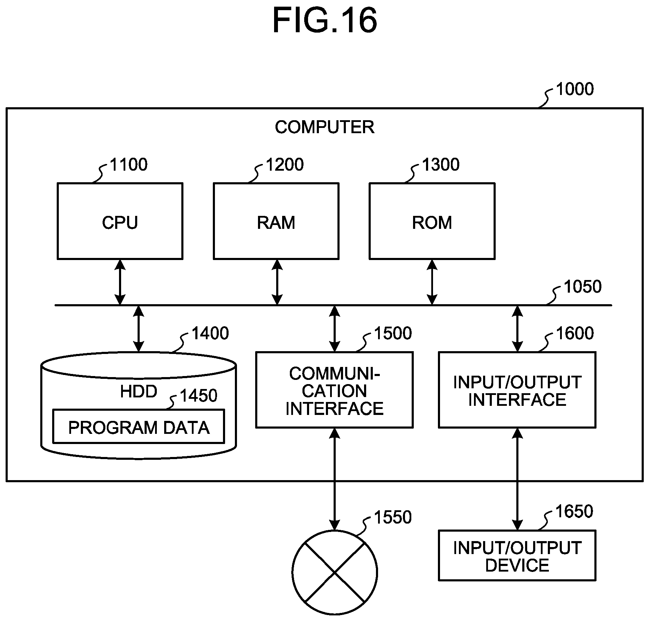

The information device such as the display apparatus 100 according to the above-described embodiments is implemented by a computer 1000 having a configuration as illustrated in FIG. 16, for example. Hereinafter, the display apparatus 100 according to the embodiments will be described as an example. FIG. 16 is a hardware configuration diagram illustrating an example of the computer 1000 that implements functions of the display apparatus 100. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 decompresses a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is started, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an information processing program according to the present disclosure, which is an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the display apparatus 100 according to the embodiment, the CPU 1100 of the computer 1000 implements the functions of the control unit 130 and the like by executing the signal processing program loaded on the RAM 1200. In addition, the HDD 1400 stores data such as a signal processing program and the like. Note that the CPU 1100 reads the program data 1450 from the HDD 1400 and executes the program data, but as another example, these programs may be acquired from another device via the external network 1550.

Note that the present technology can also have the following configurations.

(1) A display apparatus comprising:

a display unit including a liquid crystal panel;
an exciter that is bonded to an opposite side of a surface of the liquid crystal panel and is driven to vibrate the liquid crystal panel; and
an output control unit configured to control driving the exciter in a range exceeding a predetermined frequency based on information regarding the liquid crystal panel to output sound from the liquid crystal panel.

(2) The display apparatus according to (1), wherein

the output control unit
drives the exciter on a basis of the predetermined frequency based on the resonance frequency of the liquid crystal panel.

(3) The display apparatus according to (2), wherein

the output control unit
drives the exciter on a basis of the predetermined frequency based on an excitation force for driving the exciter.

(4) The display apparatus according to (2) or (3), wherein

the output control unit
drives the exciter on a basis of the predetermined frequency based on weight of the liquid crystal panel.

(5) The display apparatus according to any one of (2) to (4), wherein

the output control unit
drives the exciter on a basis of the predetermined frequency based on an area of the liquid crystal panel.

(6) The display apparatus according to any one of (1) to (5), further comprising:

a sound output unit configured to perform sound output by a method different from the exciter, wherein
the output control unit
controls driving of an audio output unit other than the exciter together with the exciter.

(7) The display apparatus according to (6), wherein
when receiving an input of a sound signal, the output control unit separates the sound signal on a basis of the predetermined frequency, drives the exciter with the separated sound signal corresponding to a frequency domain exceeding the predetermined frequency, and drives the sound output unit other than the exciter with the separated sound signal including a frequency domain equal to or lower than the predetermined frequency.
(8) The display apparatus according to (7), wherein

the output control unit
drives a sound output unit other than the exciter with the separated sound signal corresponding to the frequency domain equal to or lower than the predetermined frequency.

(9) The display apparatus according to (7) or (8), wherein
in a case where the output control unit includes the sound output unit having an exciter as a center channel output and a sound output unit other than the exciter as the left and right channel output, the output control unit separates a frequency domain equal to or lower than the predetermined frequency of a sound signal input to the center channel output and synthesizes the separated sound signal component with the sound signal input to the left and right channel output.
(10) The display apparatus according to any one of (1) to (9), wherein

the liquid crystal panel
is an edge-lit liquid crystal panel.

(11) The display apparatus according to (10), wherein

the liquid crystal panel
has a structure in which no air layer is provided between the exciter, a light guide plate in an edge-lit liquid crystal panel, and a liquid crystal cell.

(12) The display apparatus according to (11), wherein

a plurality of exciters
is bonded to the opposite side of the surface of the liquid crystal panel, and
the output control unit
controls output of the plurality of exciters.

(13) The display apparatus according to any one of (1) to (12), wherein

the exciter
is installed on an opposite side of a standing image display side in a stereoscopic display and is driven to vibrate the stereoscopic display, and
the output control unit
controls driving the exciter in a range not exceeding a predetermined frequency on a basis of information regarding the stereoscopic display to output sound from the stereoscopic display.

(14) A signal processing method executed by a display apparatus as a computer including:

a display unit including a liquid crystal panel; and
an exciter that is bonded to an opposite side of a surface of the liquid crystal panel and is driven to vibrate the liquid crystal panel, the method comprising:
controlling driving the exciter in a range exceeding a predetermined frequency based on information regarding the liquid crystal panel to output sound from the liquid crystal panel.

(15) The signal processing method according to (14), wherein
the exciter is driven on a basis of the predetermined frequency based on a resonance frequency of the liquid crystal panel.
(16) The signal processing method according to (15), wherein
the exciter is driven on a basis of the predetermined frequency based on an excitation force for driving the exciter.
(17) The signal processing method according to (15) or (16), wherein
the exciter is driven on a basis of the predetermined frequency based on weight of the liquid crystal panel.
(18) The signal processing method according to any one of (15) to (17), wherein
the exciter is driven on a basis of the predetermined frequency based on an area of the liquid crystal panel.
(19) The signal processing method according to any one of (14) to (18), wherein

the display apparatus
includes a sound output unit configured to perform sound output by a method different from the exciter, the method further comprising:
controlling driving of a sound output unit other than the exciter together with the exciter.

(20) A display apparatus comprising:

a display unit including an edge-lit liquid crystal panel; and
an exciter that is bonded to an opposite side of a surface of the edge-lit liquid crystal panel and is driven to vibrate the edge-lit liquid crystal panel, wherein
the exciter
includes at least one vibrating element for a frequency domain output exceeding a predetermined frequency.

Reference Signs List

100    DISPLAY APPARATUS

110    COMMUNICATION UNIT

120    STORAGE UNIT

130    CONTROL UNIT

131    ACQUISITION UNIT

132    OUTPUT CONTROL UNIT

200    DISPLAY UNIT

210    LCD CELL

220    DIFFUSION PLATE

230    LIGHT GUIDE PLATE

240    REFLECTIVE SHEET

250    SHEET METAL PART

260    LIGHT SOURCE

300    EXCITER

310    SIDE SPEAKER

350    SOUND OUTPUT UNIT

**Claims**

1.  A display apparatus comprising:

    a display unit including a liquid crystal panel;
    an exciter that is bonded to an opposite side of a surface of the liquid crystal panel and is driven to vibrate the liquid crystal panel; and
    an output control unit configured to control driving the exciter in a range exceeding a predetermined frequency based on information regarding the liquid crystal panel to output sound from the liquid crystal panel.

2.  The display apparatus according to claim 1, wherein

    the output control unit
    drives the exciter on a basis of the predetermined frequency based on the resonance frequency of the liquid crystal panel.

3.  The display apparatus according to claim 2, wherein

    the output control unit
    drives the exciter on a basis of the predetermined frequency based on an excitation force for driving the exciter.

4.  The display apparatus according to claim 2, wherein

    the output control unit
    drives the exciter on a basis of the predetermined frequency based on weight of the liquid crystal panel.

5.  The display apparatus according to claim 2, wherein

    the output control unit
    drives the exciter on a basis of the predetermined frequency based on an area of the liquid crystal panel.

6.  The display apparatus according to claim 1, further comprising:

    a sound output unit configured to perform sound output by a method different from the exciter, wherein
    the output control unit
    controls driving of an audio output unit other than the exciter together with the exciter.

7.  The display apparatus according to claim 6, wherein
    when receiving an input of a sound signal, the output control unit separates the sound signal on a basis of the predetermined frequency, drives the exciter with the separated sound signal corresponding to a frequency domain exceeding the predetermined frequency, and drives the sound output unit other than the exciter with the separated sound signal including a frequency domain equal to or lower than the predetermined frequency.

8.  The display apparatus according to claim 7, wherein

    the output control unit
    drives a sound output unit other than the exciter with the separated sound signal corresponding to the frequency domain equal to or lower than the predetermined frequency.

**9.** The display apparatus according to claim 7, wherein
in a case where the output control unit includes the sound output unit having an exciter as a center channel output and a sound output unit other than the exciter as the left and right channel output, the output control unit separates a frequency domain equal to or lower than the predetermined frequency of a sound signal input to the center channel output and synthesizes the separated sound signal component with the sound signal input to the left and right channel output.

**10.** The display apparatus according to claim 1, wherein

the liquid crystal panel
is an edge-lit liquid crystal panel.

**11.** The display apparatus according to claim 10, wherein

the liquid crystal panel
has a structure in which no air layer is provided between the exciter, a light guide plate in an edge-lit liquid crystal panel, and a liquid crystal cell.

**12.** The display apparatus according to claim 11, wherein

a plurality of exciters
is bonded to the opposite side of the surface of the liquid crystal panel, and
the output control unit
controls output of the plurality of exciters.

**13.** The display apparatus according to claim 1, wherein

the exciter
is installed on an opposite side of a standing image display side in a stereoscopic display and is driven to vibrate the stereoscopic display, and
the output control unit
controls driving the exciter in a range not exceeding a predetermined frequency on a basis of information regarding the stereoscopic display to output sound from the stereoscopic display.

**14.** A signal processing method executed by a display apparatus as a computer including:

a display unit including a liquid crystal panel; and
an exciter that is bonded to an opposite side of a surface of the liquid crystal panel and is driven to vibrate the liquid crystal panel, the method comprising:
controlling driving the exciter in a range exceeding a predetermined frequency based on information regarding the liquid crystal panel to output sound from the liquid crystal panel.

**15.** The signal processing method according to claim 14, wherein
the exciter is driven on a basis of the predetermined frequency based on a resonance frequency of the liquid crystal panel.

**16.** The signal processing method according to claim 15, wherein
the exciter is driven on a basis of the predetermined frequency based on an excitation force for driving the exciter.

**17.** The signal processing method according to claim 15, wherein
the exciter is driven on a basis of the predetermined frequency based on weight of the liquid crystal panel.

**18.** The signal processing method according to claim 15, wherein
the exciter is driven on a basis of the predetermined frequency based on an area of the liquid crystal panel.

**19.** The signal processing method according to claim 14, wherein

the display apparatus

includes a sound output unit configured to perform sound output by a method different from the exciter, the method further comprising:

controlling driving of a sound output unit other than the exciter together with the exciter.

20. A display apparatus comprising:

a display unit including an edge-lit liquid crystal panel; and
an exciter that is bonded to an opposite side of a surface of the edge-lit liquid crystal panel and is driven to vibrate the edge-lit liquid crystal panel, wherein
the exciter
includes at least one vibrating element for a frequency domain output exceeding a predetermined frequency.

# FIG.1

100

200

BACK SIDE OF PANEL

300    250

# FIG.2

# FIG.3

400

# FIG.4

410

420

d

# FIG.5

EP 4 589 988 A1

# FIG.6

# FIG.7

DISPLAY APPARATUS ⌐100

COMMUNI-CATION UNIT ⌐110

N

CONTROL UNIT ⌐130

ACQUISITION UNIT ⌐131

OUTPUT CONTROL UNIT ⌐132

STORAGE UNIT ⌐120

DISPLAY UNIT ⌐200

SOUND OUTPUT UNIT ⌐350

# FIG.8

EP 4 589 988 A1

# FIG.9

C-ch INPUT → • → HPF [520] → EXCITER [300]

• → LPF [521]

L-ch INPUT → ⊕ → L-ch SPEAKER [321]

R-ch INPUT → ⊕ → R-ch SPEAKER [322]

# FIG.10

300

200

330

# FIG.11

# FIG.12

# FIG.13

# FIG.14

# FIG.15

# FIG.16

## INTERNATIONAL SEARCH REPORT

| International application No. |
| --- |
| **PCT/JP2023/029784** |

**A. CLASSIFICATION OF SUBJECT MATTER**

*H04R 3/00*(2006.01)i; *G02F 1/13*(2006.01)i; *G02F 1/1333*(2006.01)i; *G02F 1/13357*(2006.01)i; *H04N 5/64*(2006.01)i; *H04R 1/02*(2006.01)i; *H04R 5/02*(2006.01)i; *H04R 7/04*(2006.01)i; *H04R 17/00*(2006.01)i

FI: H04R3/00 310; G02F1/13 505; G02F1/1333; G02F1/13357; H04N5/64 541N; H04R1/02 102Z; H04R5/02 Z; H04R7/04; H04R17/00

According to International Patent Classification (IPC) or to both national classification and IPC

**B. FIELDS SEARCHED**

Minimum documentation searched (classification system followed by classification symbols)

H04R3/00; G02F1/13; G02F1/1333; G02F1/13357; H04N5/64; H04R1/02; H04R5/02; H04R7/04; H04R17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2020-127060 A (ONKYO CORP.) 20 August 2020 (2020-08-20) paragraphs [0021]-[0024], [0028], fig. 1-4 | 1-20 |
| Y | JP 11-113083 A (NAKAMICHI CORP.) 23 April 1999 (1999-04-23) paragraphs [0003]-[0004], [0009], [0012]-[0013], fig. 1, 2 | 1-20 |
| Y | JP 59-11100 A (CLARION KK) 20 January 1984 (1984-01-20) page 3, upper left column, lines 11-14 | 4-5, 17-18 |
| Y | JP 2005-91633 A (MATSUSHITA ELECTRIC IND. CO., LTD.) 07 April 2005 (2005-04-07) paragraph [0049] | 4-5, 17-18 |
| Y | WO 2011/013405 A1 (SHARP KK) 03 February 2011 (2011-02-03) paragraphs [0015], [0029], fig. 2 | 10-11, 12, 20 |
| Y | JP 2019-523663 A (COVIDIEN LP) 29 August 2019 (2019-08-29) paragraphs [0047], [0049], fig. 4 | 13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/029784**

| Patent document cited in search report | | | Publication date (day/month/year) | Patent family member(s) | | | Publication date (day/month/year) |
|---|---|---|---|---|---|---|---|
| JP | 2020-127060 | A | 20 August 2020 | (Family: none) | | | |
| JP | 11-113083 | A | 23 April 1999 | (Family: none) | | | |
| JP | 59-11100 | A | 20 January 1984 | US seventh paragraph, line 52 to eighth paragraph, line 7 | 4551849 | A | |
| JP | 2005-91633 | A | 07 April 2005 | (Family: none) | | | |
| WO | 2011/013405 | A1 | 03 February 2011 | US paragraphs [0020], [0029], fig. 2 | 2012/0113331 | A1 | |
| JP | 2019-523663 | A | 29 August 2019 | US paragraphs [0058], [0060], fig. 4 | 2019/0298481 | A1 | |
| | | | | WO | 2017/210101 | A1 | |
| | | | | EP | 3463161 | A1 | |
| | | | | CN | 109475387 | A | |

Form PCT/ISA/210 (patent family annex) (January 2015)

**EP 4 589 988 A1**

**REFERENCES CITED IN THE DESCRIPTION**

**Patent documents cited in the description**

- WO 2018181622 A